# EUROPEAN PATENT SPECIFICATION

(11) **EP 0 701 334 B1**
(45) Date of publication and mention of the grant of the patent: **27.10.2004**
(21) Application number: 95305756.9
(22) Date of filing: 17.08.1995
(51) Int. Cl.: H04B 7/005

(54) **Method and device to measure the impulse response of a radio channel**
Verfahren und Vorrichtung zur Messung der Impulsantwort eines Funkkanals
Procédé et dispositif pour mesurer l'impulsion de réponse d'un canal radio

(30) Priority: 18.08.1994 FI 943803
(43) Date of publication of application: 13.03.1996
(73) Proprietor: Nokia Corporation, 02150 Espoo (FI)
(72) Inventor: Jokinen, Harri, FIN-25370 Hiisi (FI)
(74) Representative: Brax, Matti Juhani

(56) References cited:
- EP-A- 0 551 803
- GB-A- 2 247 812
- US-A- 5 260 972

## Description

The present invention relates to a method and a device to measure the impulse response of a radio channel in a cellular radiotelephone system comprising several base stations and subscriber equipment, and where a radio connection can be established between a base station and a subscriber equipment, the radio connection comprising a radio channel in which the transmitted signal contains a training sequence with a symbol sequence known by the receiver, whereby the training sequence comprises a correlation sequence to be correlated with a reference sequence known by the receiver, whereby this correlation provides as a result the impulse response of the channel and the receiver adapts itself to the radio channel to be used according to the measured impulse response.

Many information transmission problems of a radiotelephone system are due to time variables or statistical error sources in the radio channel which decrease the signal quality. One advantage of the digital radiotelephone system over an analog one is that it can be designed to monitor the channel and adapt to its changes. Any communications channel, whether it is a transmission line or a radio channel, will have an effect on the amplitude, frequency or phase of the transmitted signal's waveform, producing then interaction in the bit pulse set of the symbols. When a station is mobile, such as a radiotelephone in a car, the channel characteristics also have large variations as function of time. A known channel characteristics also have large variations as function of time. A known common solution in digital cellular systems is to use adaptive channel equalization. This means that the channel's transfer function is measured periodically or continuously, and then the receiver equalizes the interference caused by symbol interaction generated by the transfer function.

Depending on the system, a subscriber in a cellular system can mean a mobile station having a radio channel between its antenna and a base station antenna, or it can mean a telephone connected via a cable connection to a remote transceiver with a radio channel between the transceiver antenna and the base station antenna. In the description below we refer mainly to a mobile station, but it is to be noted that the same facts also apply to a subscriber equipment according to the latter definition. Signal strength and delay are related to the propagation distance between a base station and the mobile station. It is well known that in digital systems the trans-mission rate is typically high due to e.g. time division (TDMA), so that the multipath propagation typical for a radio path in a receiver also appears as interaction between detected bits, besides the rapid so called Rayleigh fading of the RF signal's envelope. In digital systems this is taken into account in the model representing the radio channel so that the received signal is not anymore a single Rayleigh faded signal, but the sum of signals having independent Rayleigh fading and signals with different delays and the average amplitude.

The background of the invention is described below with the aid of the enclosed schematic figures in which:
Figure 1 shows the impulse response of a radio channel in the time domain (in discrete time);
Figure 2 shows a normal burst in the GSM system;
Figure 3 shows the structure of a typical training sequence; and
Figure 4 shows the bit sequences of the training sequence in the GSM system.
Figure 5 shows a correlation according to the invention in the GSM system.
Figure 6 shows the block diagram of a GSM transceiver.

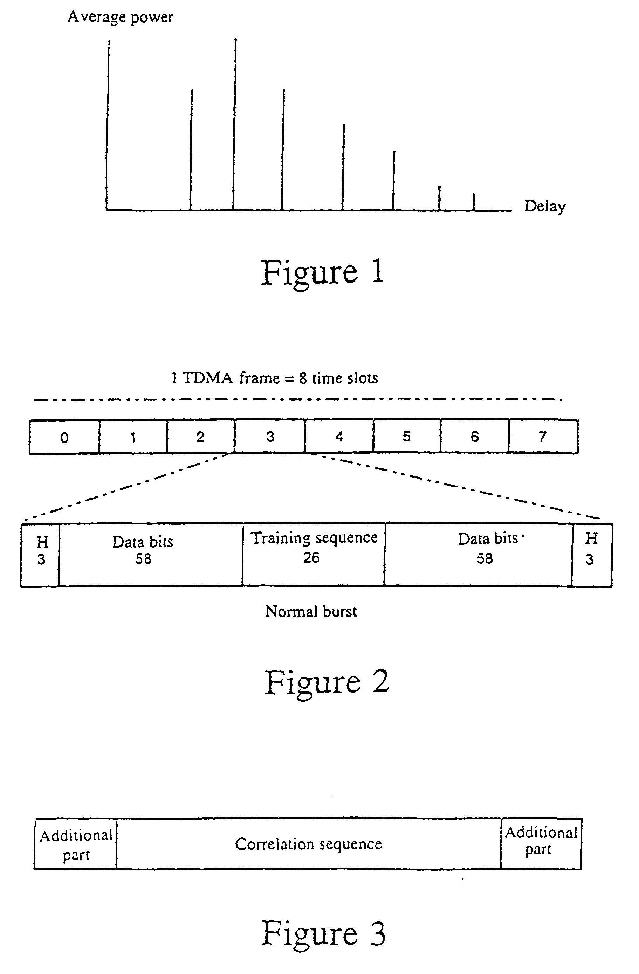

The radio channel's impulse response can be presented by a tap illustration according to figure 1. There the height of an individual tap represents the average power of a Rayleigh faded signal, and the location of the tap represents the transmission delay. The dispersion of the taps depends on the power levels in use and on the environmental conditions, and the fading rate of the taps depends on the speed of a mobile station, e.g. the speed of a car. Different systems define a set of these propagation models to represent different environmental conditions and vehicle speeds.

From the above it is clear that because a radio channel varies rapidly, the interaction between detected bits caused when the signal is transmitted through the radio channel must be equalized by measuring the channel's impulse response and by adapting the receiver to the channel's tap configuration. Usually this is made in the systems so that the base station or the mobile station within their transmission burst transmit a known bit pattern, i.e. consecutive bits in a sequence having a constant length. This sequence is called the training sequence. The receiver has in advance got information about the bit pattern of training sequence that will be transmitted. As a result of the correlation we obtain an estimate of the radio path (the delays), and the receiver adjusts its channel equalizer so that delay dispersion is equalized within a certain duration range. For instance in the GSM system the delay dispersion is equalized up to 16 µs.

For instance in the GSM system one TDMA frame comprises eight time slots. A signal is transmitted in bursts, of which figure 2 shows the so called normal burst. It comprises first three tail bits, and then 58 data bits which thus can contain data or speech. Then there is the training sequence with a length of 26 bits, then again 58 data bits, and finally three tail bits. Between the time slots of the frame there is a guard period with a length of 8.25 bits. As we can see in the figure, the training sequence is in the middle of the burst as a consecutive sequence with a constant length of 26 bits. There are 8 training sequences with different bit patterns, and the telephone has in advance received information about which training sequence the base station will transmit.

The training sequence must not necessarily be in the middle of the burst. Thus e.g. in the digital radiotelephone system used in the USA the frame comprises six time slots of 162 symbols. The symbol can contain 2 bits, as in the QPSK modulation used by the system, or even more bits depending on the modulation method. The burst transmitted in the transmit time slot from the base station to the mobile station always begins with a synchronization burst of 14 symbols (28 bits) which is used as a training sequence. It is to be noted that the length of the training sequence is constant. In this system there are training sequences with 6 different sequences.

Here it is to be noted that a training sequence is transmitted both from the subscriber equipment to the base station (uplink) and from the base station to the subscriber equipment (downlink). The symbol sequences in the training sequences have not necessarily to be the same in both directions. Irrespective of the system the sequences of the training sequences are usually designed so that they have as good autocorrelation characteristics as possible, i.e. so that there are sufficiently many zeros on both sides of the spike in the center of the autocorrelation function. A certain training sequence is suitable in a certain environment. For instance in metropolitan areas signal multipath propagation is predominant, in other words, there is a large delay dispersion on the radio channel. Then an optimal training sequence is quite different from that in the countryside, where there are less obstructions causing signal reflections, and where the delay dispersion is negligible. In current systems the training sequence has a constant length which is characteristic of the system and which is selected according to the so called worst case, so that the system is prepared to equalize deplay dispersion within a long distance in time, presuming that the channel has a multitap impulse response.

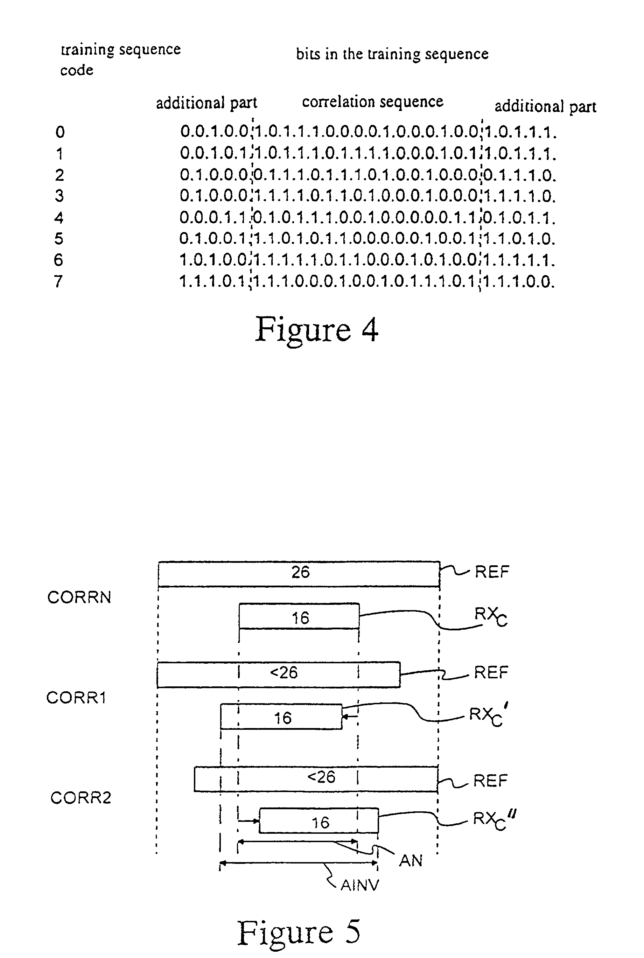

Figure 3 shows the structure of a typical training sequence. This example is from the GSM system. The training sequence comprises a correlation sequence having an additional part on both sides. The length of the correlation sequence is 16 bits, and both additional parts have a length of 5 bits. Thus the form of the training sequence is 5 + 16 + 5. Figure 4 shows the bit sequences of the training sequences in use. As was already stated above, the sequences have been selected so that they have good autocorrelation characteristics. The length of the additional part determines the length of the impulse response which can be estimated by the respective training sequence. In GSM the length of the additional part is selected in accordance with the worst case, or training sequences of the same form are used throughout the system, even if it is not necessary to estimate all taps measurable during the training sequence: if the delay dispersion is small, as the case is in a countryside with rather even ground, then the estimation of only a few taps would be sufficient.

The additional part has not to be on both sides of the correlation sequence, as in the GSM system, but there could be only one additional part which is placed either before or after the correlation sequence. In practice this additional part is formed so that either the first and/or the last symbols of the correlation sequence are selected to be symbols of the additional part. A training sequence with this structure has a useful characteristic in that a correlation sequence different from the original correlation sequence can be selected from the training sequence, so that the new correlation sequence has a length which is in accordance with the original correlation sequence, but partly comprises symbols of the additional part. The new correlation sequence formed in this way must of course comprise consecutive symbols belonging to the training sequence. The measurement of the radio channel's impulse response can be made more effectively utilizing this above mentioned characteristic of the training sequence, if the radio channel's delay dispersion and the timing error in the receiver are sufficiently small.

The lengths of the training sequence's additional parts and of the training sequence itself have an essential significance: the longer the correlation sequence (the more bits or symbols) the better channel estimate is obtained, because when a long correlation period is used the noise will be averaged and does not corrupt the result. On the other hand, the longer the training sequence (in bits or symbols) the longer delay dispersions can be measured and correspondingly the receiver's timing error can be larger. For example the GSM system is prepared for the worst case by selecting the length of the additional part to be 5 bits. With such a training sequence it is possible to measure an impulse response of 5 taps and at the same time have a considerable allowance for timing inaccuracies in the receiver.

EP-A-0 551 803 discloses how a set of correlation values that represent a maximal amount of signal energy should be selected to represent the impulse response of a radio channel.

The object of the invention is to present a method and a device which can improve the measurement of the impulse response without having a longer correlation sequence. This is possible by making two correlations so that at least in one correlation there is used a correlation sequence that corresponds to a different part of the reference sequence known by the receiver than the original correlation sequence, comprises some of the additional part and has the same length as the original correlation sequence, and the final correlation result is formed by combining the results of the two correlations. Regarding the correlation the result will then seem as if the correlation sequence would have been made longer, whereby a better estimate (or a better measurement of the impulse response) of the channel is obtained and the signal to noise ratio is improved. The measurement can also be made so that a correlation sequence that corresponds to a different part of the reference sequence known by the receiver than the original correlation sequence is used for both correlations. Then the reference sequence must be made shorter in accordance with how much the correlation sequences differ from the original correlation sequence.

The method according to the invention is characterized by the features recited in the characterizing part of the independent claim directed to a method.

The receiver (device) of the invention is characterized by the features recited in the characterizing part of the independent claim directed to a receiver.

Below the invention is described in more detail with reference to
figure 5 which shows the measurement of the impulse response made according to the invention; and to

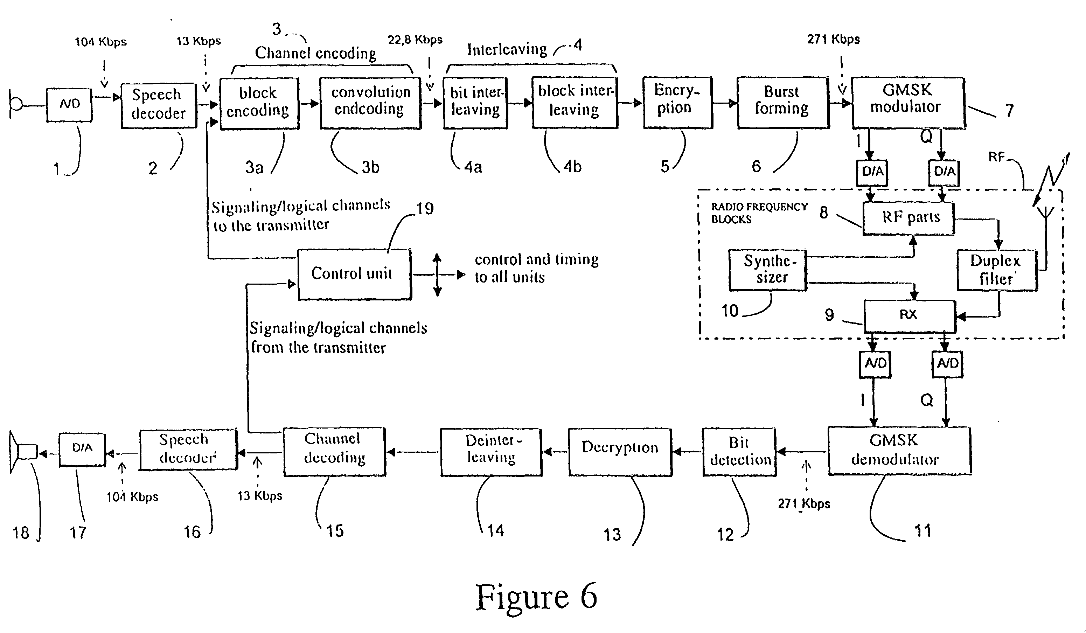

figure 6 which shows the block diagram of a GSM transceiver.

Figure 5 illustrates the correlation according to the invention in the GSM system. In the example shown in figure 5 there is shown at the top the usually made correlation CORRN, where the sixteen first bits of the received signal's training sequence RX_{C} or the correlation sequence is correlated to a predetermined bit sequence of the reference signal REF or the reference sequence REF, which has a length of the training sequence or 26 bits. According to one embodiment of the invention two correlations CORR1 and CORR2 are made so that the reference signal and the received signal are shifted in relation to each other. Figure 5 shows one way to make this. There we don't take the whole reference signal REF for the correlation, but a somewhat shorter part of the reference signal, e.g. so that a few bits either at the beginning or at the end of the reference sequence REF are omitted, as is shown in figure 5 for the first correlation CORR1 and the second correlation CORR2, respectively. When the correlation sequence RX_{C}' is centered on the partial reference signal we obtain the same effect as if the received signal's correlation sequence RX_{C} were shifted in relation to the reference signal REF, as can be seen in figure 5. The results of the first CORR1 and the second CORR2 correlations are combined to obtain the result of the impulse response measurement. When the signals REF and RX_{C} are shifted in relation to each other in different directions for the first correlation CORR1 and the second correlation CORR2 we will have a larger correlation range AINV for the received signal RX_{C} than the range AN which is achieved by the commonly made correlation CORRN. Alternatively the correlation can be made so that the reference signal REF and the received signal RX_{C} are shifted in relation to each other only in one of the correlations, or for instance we could have the correlations CORRN and CORR1, or CORRN and CORR2 shown in figure 5. Thus it is essential that at least in one correlation the reference signal REF and the received signal RX_{C} are shifted in relation to each other, whereby a larger correlation range is achieved when the two correlations are combined. If relatively large shifts are made for both correlations the shifts should be of different sizes and/or in different directions (or so that in the first correlation the received signal RX_{C} is shifted in relation to the reference signal REF in a different direction than in the second correlation).

In order to realize the method according to the invention we describe below as an example the transmission and reception in the GSM mobile system, with reference to figure 6 showing a block diagram of a transceiver of the GSM system. The first step of the transmission sequence is the digitization 1 and encoding 2 of the analog speech. The sampling is made at a frequency of 8 kHz, and the algorithm presumes that the input signal is 13 bit linear PCM. The samples are segmented into frames of 160 samples, so that the length of the frame is 20 ms. In the GSM system the speech encoder processes the 20 ms speech frames, i.e. before starting the encoding 20 ms of speech is stored in a buffer. The encoding operations are then made for each frame or subframes of these (in blocks of 40 samples). As a result of the encoding in the encoder 2 we obtain 260 bits from one frame. After the speech encoding 2 the channel encoding 2 is made in two steps, whereby first a part (the 50 most important) of the bits (260 bits) are protected with a block code 3a (= CRC, 3 bits), and then these bits and the next most important bits (132) are further protected with a convolution code 3b (encoding ratio 1/2) ((50 + 3 + 132 + 4)*2 = 378), and a part (78) of the bits are taken as unprotected. In the block encoding 3a a bit sequence is added to the end of the speech frame with the aid of which transmission errors can be detected in the receiver. In the convolution encoding 3b the redundancy of the speech frame is increased. In total 456 bits are then transmitted for each 20 ms frame. These 456 bits are interleaved 4, and the interleaving 4 is also a two-phase operation. First the order of the bits in the frame are interleaved 4a and the interleaved bits are divided into eight blocks of the same size. These blocks are further divided 4b into eight consecutive TDMA frames, or so that the interleaved 456 bits are transmitted in eight time slots (each containing 57 bits) of the radio path. The aim of the interleaving is to spread evenly over the whole transmitted data the transmission errors, which usually occur as error bursts, whereby the channel decoding operates more effectively. After deinterleaving the error burst is changed into separate error bits, which can be corrected in the channel decoding. The next step in the transmission sequence is the data encryption 5. The encryption is made by an algorithm which is one of the most closely guarded secrets of GSM. The encryption prevents unauthorized listening of the calls, which is possible in analog networks. The burst to be transmitted is formed 6 from the encrypted data by adding to it a training sequence, tail bits and a guard period. The burst to be transmitted is supplied to a GMSK modulator 7 which modulates the burst for the transmission. The GMSK (Gaussian Minimum Shift Keying) is a constant amplitude digital modulation method, in which the information is contained in the phase shifts. The transmitter 8 mixes the modulated burst via one or more intermediate frequencies up to 900 Mhz and transmits it over the antenna on the radio path. The transmitter 8 is one of the three radio frequency blocks RF. The receiver 9 is the first block on the receiver side and compared to the transmitter 8 it performs the inverse operations. The third RF block is the synthesizer 10, which generates the frequencies. The GSM system uses frequency hopping, in which the transmit and receive frequencies are changed for each TDMA frame. The frequency hopping increases the quality of the connection, but places strict requirements on the synthesizer 10. The synthesizer must be able to switch to from one frequency to the next within one millisecond.

The inverse operations to the transmission are made in the reception. After the RF receiver 9 and the demodulator 11 bit detection is made in the bit detection block 12 comprising a channel equalizer and where bits in the received samples are detected, or we try to find out the transmitted bit sequence, and where the received signal is correlated by correlating the received signal's training sequence RX_{C} with a predetermined reference sequence REF. After the detection there is decryption 13 an deinterleaving 14 and the detected bits are channel decoded 15 and checked by a cyclic redundancy check (CRC). The channel decoding 15 tries to correct bit errors occurring in the transmission of the burst. After the channel decoding 15 the speech frame with a length of 260 bits contain the parameters describing the transmitted speech with which the speech encoding 16 generates the speech signal. The speech signal is D/A-converted 17 and supplied to the receiver's loudspeaker 18.

The transceiver has further a control unit 19 which controls all blocks and coordinates their functions and controls their timing. The control unit 19 comprises e.g. a microprocessor and/or a digital signal processor.

In practice the reference sequence may be in the control unit's 19 memory in order to perform the correlation in the bit detection block 12 or it could be directly in the memory of the bit detection block. The shift of the reference signal and the received signal in relation to each other according to the invention may be performed independently in the bit detection block 12 or controlled by the control unit 19, whereby the respective block/unit is programmed in advance with the relative shift to be made in the correlation. In principle the shifts could be made also e.g. with delay elements arranged at the channel decoder (which is in included in the bit detection block 12), whereby these elements delay the signals and provide a relative shift.

The relative shift between the correlations made according to the invention can be e.g. 5 samples or bits. Then the length of the effective correlation increases by 5 bits, e.g. in the GSM system from 16 bits to 21 bits, whereby the noise is reduced by 21/16 = 1,2 dB compared to the common correlation. Such an improvement in the measurement of the impulse response leads to a total performance improvement of 0,2 dB in the receiver chain. In the type approval tests of mobile phones the smallest realization margin could be of the order of 0,5 dB, so that even an improvement of 0,2 dB could prove crucial. Thus the method of the invention improves the performance of a mobile phone. A corresponding improvement of the performance by other means would typically require much more processing than the method according to the invention and would thus lead to substantially higher power consumption or would substantially increase the price of the telephone.

The object of the presented method is to achieve a channel estimate which is as good as possible on the radio connection in use, but the invention could equally well be used to achieve a good synchronization, because when a mobile station is adapted as well as possible to the channel we achieve a good synchronization besides the correction of the delay dispersion and the correct channel estimation.

However, the invention is not limited to the above examples, but the invention can be realized within the know-how of a person skilled in the art within the scope of the enclosed claims.

## Claims

1. A method to measure the impulse response of a radio channel in a cellular radiotelephone system comprising a plurality of base stations and subscriber equipment and where a radio connection can be established between a base station and a subscriber equipment, the radio connection comprising a radio channel in which a transmitted signal contains a training sequence with a symbol sequence known by the receiver, whereby the training sequence comprises an original correlation sequence (RX_{C}) of certain length to be correlated with a reference sequence (REF) known by the receiver and an additional part, whereby this correlation provides as a result the impulse response of the channel and the receiver adapts itself to the radio channel to be used according to the measured impulse response, **characterized in that** at least two correlations are made on the received signal, resulting in two estimates of the radio channel, whereby:
- the correlation sequence (RX_{C}') used in at least one of said two correlations corresponds to a different part of the reference sequence (REF) known by the receiver than the original correlation sequence (RX_{C}), comprises some of the additional part and has the same length as the original correlation sequence,
- said correlation sequence (RX_{C}') corresponding to different part of the reference sequence than the original correlation sequence is correlated with a part of the reference sequence (REF) that is shorter than the whole reference sequence (REF) and
- the results of said at least two correlations are combined to form the impulse response of the channel.

2. The method according to claim 1, **characterized in that** a part of the received signal corresponding to the original correlation sequence (RX_{C}) and the whole reference sequence (REF) known by the receiver are correlated with each other in one correlation.

3. The method according to claim 1, **characterized in that** in the correlation between said correlation sequence (RX_{C}') corresponding to different part of the reference sequence than the original correlation sequence and said shorter part of the reference sequence (REF), said correlation sequence (RX_{C}') corresponding to different part of the reference sequence than the original correlation sequence (RX_{C}) is centered on said shorter part of the reference sequence.

4. The method according to claim 3, **characterized in that** in both of said two correlations a correlation sequence (RX_{C}', RX_{C}") corresponding to a different part of the reference sequence (REF) than the original correlation sequence is used, and correlated with a part of the reference sequence (REF) that is shorter than the whole reference sequence (REF).

5. A method according to claim 4, **characterized in that** for the different correlations the center of the respective correlation sequence (RX_{C}', RX_{C}") differs from the center of the original correlation sequence by a different amount.

6. A method according to any of claims 4 or 5, **characterized in that** for the different correlations the center of the respective correlation sequence (RX_{C}', RX_{C}") is located in different direction from the center of the original correlation sequence.

7. A receiver of a radiotelephone system comprising a plurality of base stations and subscriber equipment and where a radio connection can be established between a base station and a subscriber equipment, the radio connection comprising a radio channel in which a transmitted signal contains a training sequence with a symbol sequence known by the receiver, whereby the training sequence comprises an original correlation sequence (RX_{C}) of a certain length to be correlated with a reference sequence (REF) known by the receiver and an additional part, whereby this correlation provides as a result the impulse response of the channel and the receiver adapts itself to the radio channel to be used according to the measured impulse response, **characterized in that** it comprises means (12, 19) for making at least two correlations on the received signal, resulting in two estimates of the radio channel, said means (12, 19) comprising:
- means for taking, as the correlation sequence (RX_{C}') used for at least one of said two correlations, part of the received signal that corresponds to a different part ofthe reference sequence (REF) known by the receiver than the original correlation sequence, comprises some of the additional part and has the same length as the original correlation sequence,
- means for taking a part of the reference sequence (REF) that is shorter than the whole reference sequence (REF) for correlation with said correlation sequence that corresponds to a different part of the reference sequence than the original correlation sequence and
- means for combining the results of said at least two correlations to form the impulse response of the channel.

8. The receiver according to claim 7, **characterized in that** said means (12, 19) comprise a programmable digital signal processor to realize the selection of a part of the received signal corresponding to different part of the reference sequence than the original correlation sequence.

9. The receiver according to claim 7, **characterized in that** said means (12, 19) comprise delay elements to realize the selection of a part of the received signal corresponding to different part of the reference sequence than the original correlation sequence.

## Patentansprüche

1. Verfahren zum Messen der Impulsantwort eines Funkkanals in einem Zellenfunktelephonsystem, das mehrere Basisstationen und Teilnehmergeräte umfasst und bei dem eine Funkverbindung zwischen einer Basisstation und einem Teilnehmergerät aufgebaut werden kann, wobei die Funkverbindung einen Funkkanal umfasst, in dem ein gesendetes Signal eine Trainingsfolge mit einer dem Empfänger bekannten Symbolfolge gesendet werden kann, wobei die Trainingsfolge eine ursprüngliche Korrelationsfolge (RX_{C}) mit bestimmter Länge, die mit einer dem Empfänger bekannten Referenzfolge (REF) zu korrelieren ist, und einen weiteren Teil umfasst, wobei diese Korrelation als Ergebnis die Impulsantwort des Kanals ergibt und der Empfänger sich an den zu verwendenden Funkkanal entsprechend der gemessenen Impulsantwort anpasst, **dadurch gekennzeichnet, dass** wenigstens zwei Korrelationen an dem empfangenen Kanal ausgeführt werden, was zwei Schätzungen des Funkkanals zur Folge hat, wobei:
- die Korrelationsfolge (RX_{C}'), die in wenigstens einer der zwei Korrelationen verwendet wird, einem von der ursprünglichen Korrelationsfolge (RX_{C}) verschiedenen Teil der dem Empfänger bekannten Referenzfolge (REF) entspricht, einen Teil des zusätzlichen Teils umfasst und die gleiche Länge wie die ursprüngliche Korrelationsfolge besitzt,
- die Korrelationsfolge (RX_{C}'), die dem von der ursprünglichen Korrelationsfolge verschiedenen Teil der Referenzfolge entspricht, mit einem Teil der Referenzfolge (REF) korreliert wird, der kürzer als die gesamte Referenzfolge (REF) ist, und
- die Ergebnisse der wenigstens zwei Korrelationen kombiniert werden, um die Impulsantwort des Kanals zu bilden.

2. Verfahren nach Anspruch 1, **dadurch gekennzeichnet, dass** ein Teil des empfangenen Signals, der der ursprünglichen Korrelationsfolge (RX_{C}) entspricht, und die gesamte dem Empfänger bekannte Referenzfolge (REF) miteinander in einer Korrelation korreliert werden.

3. Verfahren nach Anspruch 1, **dadurch gekennzeichnet, dass** in der Korrelation zwischen der Korrelationsfolge (RX_{C}'), die einem von der ursprünglichen Korrelationsfolge verschiedenen Teil der Referenzfolge entspricht, und dem kürzeren Teil der Referenzfolge (REF) die Korrelationsfolge (RX_{C}'), die einem von der ursprünglichen Korrelationsfolge (RX_{C}) verschiedenen Teil der Referenzfolge entspricht, auf den kürzeren Teil der Referenzfolge zentriert ist.

4. Verfahren nach Anspruch 3, **dadurch gekennzeichnet, dass** in den beiden Korrelationen eine Korrelationsfolge (RX_{C}', RX_{C}"), die einem von der verschiedenen Teil der Referenzfolge (REF) entspricht, verwendet wird und mit einem Teil der Referenzfolge (REF), der kürzer als die gesamte Referenzfolge (REF) ist, korreliert wird.

5. Verfahren nach Anspruch 4, **dadurch gekennzeichnet, dass** sich für die verschiedenen Korrelationen das Zentrum der jeweiligen Korrelationsfolge (RX_{C}', RX_{C}") vom Zentrum der ursprünglichen Korrelationsfolge um einen unterschiedlichen Betrag unterscheidet.

6. Verfahren nach Anspruch 4 oder 5, **dadurch gekennzeichnet, dass** sich für die verschiedenen Korrelationen das Zentrum der jeweiligen Korrelationsfolge (RX_{C}', RX_{C}") in einer unterschiedlichen Richtung von dem Zentrum der ursprünglichen Korrelationsfolge befindet.

7. Empfänger eines Funktelephonsystems, das mehrere Basisstationen und Teilnehmergeräte umfasst und bei dem eine Funkverbindung zwischen einer Basisstation und einem Teilnehmergerät aufgebaut werden kann, wobei die Funkverbindung einen Funkkanal umfasst, in dem ein gesendetes Signal eine Trainingsfolge mit einer dem Empfänger bekannten Symbolfolge enthält, wobei die Trainingsfolge eine ursprüngliche Korrelationsfolge (RX_{C}) mit bestimmter Länge, die mit einer dem Empfänger bekannten Referenzfolge (REF) zu korrelieren ist, und einen zusätzlichen Teil umfasst, wobei diese Korrelation als ein Ergebnis die Impulsantwort des Kanals ergibt und der Empfänger sich an den zu verwendenden Funkkanal entsprechend der gemessenen Impulsantwort anpasst, **dadurch gekennzeichnet, dass** er Mittel (12, 19) umfasst, die wenigstens zwei Korrelationen an dem empfangenen Kanal ausführen, was zwei Schätzungen des Funkkanals zur Folge hat, wobei diese Mittel (12, 19) umfassen:
- Mittel, die als die Korrelationsfolge (RX_{C}'), die für wenigstens eine der zwei Korrelationen verwendet wird, einen Teil des empfangenen Signals verwenden, der einem von der ursprünglichen Korrelationsfolge verschiedenen Teil der dem Empfänger bekannten Referenzfolge (REF) entspricht, einen Teil des zusätzlichen Teils umfasst und die gleiche Länge wie die ursprüngliche Korrelationsfolge hat,
- Mittel, die einen Teil der Referenzfolge (REF), der kürzer als die gesamte Referenzfolge (REF) ist, für die Korrelation mit der Korrelationsfolge, die einem von der ursprünglichen Korrelationsfolge verschiedenen Teil der Referenzfolge entspricht, verwenden, und
- Mittel, die die Ergebnisse der wenigstens zwei Korrelationen kombinieren, um die Impulsantwort des Kanals zu bilden.

8. Empfänger nach Anspruch 7, **dadurch gekennzeichnet, dass** die Mittel (12, 19) einen programmierbaren digitalen Signalprozessor umfassen, um die Auswahl eines Teils des empfangenen Signals, der einem von der ursprünglichen Korrelationsfolge verschiedenen Teil der Referenzfolge entspricht, auszuführen.

9. Empfänger nach Anspruch 7, **dadurch gekennzeichnet, dass** die Mittel (12, 19) Verzögerungselemente umfassen, um die Auswahl eines Teils des empfangenen Signals, der einem von der ursprünglichen Korrelationsfolge verschiedenen Teil der Referenzfolge entspricht, auszuführen.

## Revendications

1. Procédé pour mesurer la réponse impulsionnelle d'un canal radio dans un système de radiotéléphone cellulaire comprenant une pluralité de stations de base et un équipement d'abonné, et où une connexion radio peut être établie entre une station de base et un équipement d'abonné, la connexion radio comprenant un canal radio dans lequel un signal transmis contient une séquence d'apprentissage avec une séquence de symboles connue du récepteur, grâce à quoi la séquence d'apprentissage comprend une séquence de corrélation d'origine (RX_{c}) d'une certaine longueur devant être corrélée avec une séquence de référence (REF) connue du récepteur et une partie additionnelle, grâce à quoi cette corrélation procure en tant que résultat la réponse impulsionnelle du canal et le récepteur s'adapte de lui-même au canal radio à utiliser conformément à la réponse impulsionnelle mesurée, **caractérisé en ce qu'**au moins deux corrélations sont faites sur le signal reçu, ce qui résulte en deux estimations du canal radio, grâce à quoi :
- la séquence de corrélation (RX_{c}') utilisée dans au moins l'une desdites deux corrélations correspond à une partie de la séquence de référence (REF) connue du récepteur autre que celle de la séquence de corrélation d'origine (RX_{c}), comprend une partie de la partie additionnelle et présente la même longueur que la séquence de corrélation d'origine,
- ladite séquence de corrélation (RX_{c}') correspondant à une partie de la séquence de référence autre que celle de la séquence de corrélation d'origine est corrélée avec une partie de la séquence de référence (REF) qui est plus courte que toute la séquence de référence (REF), et
- les résultats desdites au moins deux corrélations sont combinés pour former la réponse impulsionnelle du canal.

2. Procédé selon la revendication 1, **caractérisé en ce qu'**une partie du signal reçu correspondant à la séquence de corrélation d'origine (RX_{c}) et toute la séquence de référence (REF) connue du récepteur sont corrélées mutuellement dans une corrélation.

3. Procédé selon la revendication 1, **caractérisé en ce que** la corrélation entre ladite séquence de corrélation (RX_{c}') correspondant à une partie de la séquence de référence autre que celle de la séquence de corrélation d'origine et ladite partie plus courte de la séquence de référence (REF), ladite séquence de corrélation (RX_{c}') correspondant à une partie de la séquence de référence autre que celle de la séquence de corrélation d'origine (RX_{c}) est centrée sur ladite partie plus courte de la séquence de référence.

4. Procédé selon la revendication 3, **caractérisé en ce que** dans les deux desdites deux corrélations, une séquence de corrélation (RX_{c}', RX_{c}'') correspondant à une partie de la séquence de référence (REF) autre que celle de la séquence de corrélation d'origine est utilisée, et corrélée avec une partie de la séquence de référence (REF) qui est plus courte que toute la séquence de référence (REF).

5. Procédé selon la revendication 4, **caractérisé en ce que** pour les corrélations différentes, le centre de la séquence de corrélation respective (RX_{c}', RX_{c}'') diffère du centre de la séquence de corrélation d'origine d'une valeur différente.

6. Procédé selon l'une quelconque des revendications 4 ou 5, **caractérisé en ce que** pour les corrélations différentes, le centre de la séquence de corrélation respective (RX_{c}', RX_{c}'') est situé dans une direction différente par rapport au centre de la séquence de la corrélation d'origine.

7. Récepteur d'un système de radiotéléphone comprenant une pluralité de stations de base et un équipement d'abonnés et où une connexion radio peut être établie entre une station de base et un équipement d'abonné, la connexion radio comprenant un canal radio dans lequel un signal transmis contient une séquence d'apprentissage avec une séquence de symboles connue du récepteur, grâce à quoi la séquence d'apprentissage comprend une séquence de corrélation d'origine (RX_{c}) d'une certaine longueur devant être corrélée avec une séquence de référence (REF) connue du récepteur et une partie additionnelle, grâce à quoi cette corrélation procure en tant que résultat la réponse impulsionnelle du canal et le récepteur s'adapte de lui-même au canal radio à utiliser conformément à la réponse impulsionnelle mesurée, **caractérisé en ce qu'**il comprend un moyen (12, 19) destiné à établir au moins deux corrélations sur le signal reçu, ce qui résulte en deux estimations du canal radio, ledit moyen (12, 19) comprenant :
- un moyen destiné à prendre, en tant que séquence de corrélation (RX_{c}') utilisée pour au moins l'une desdites deux corrélations, une partie du signal reçu qui correspond à une partie de la séquence de référence (REF) connue du récepteur autre que celle de la séquence de corrélation d'origine, comprend une partie de partie additionnelle et présente la même longueur que la séquence de corrélation d'origine,
- un moyen destiné à prendre une partie de la séquence de référence (REF) qui est plus courte que toute la séquence de référence (REF) pour une corrélation avec ladite séquence de corrélation qui correspond à une partie de la séquence de référence autre que celle de la séquence de corrélation d'origine, et
- un moyen destiné à combiner les résultats desdites au moins deux corrélations pour former la réponse impulsionnelle du canal.

8. Récepteur selon la revendication 7, **caractérisé en ce que** ledit moyen (12, 19) comprend un processeur de signal numérique programmable pour réaliser la sélection d'une partie du signal reçu correspondant à une partie de la séquence de référence autre que celle de la séquence de corrélation d'origine.

9. Récepteur selon la revendication 7, **caractérisé en ce que** ledit moyen (12, 19) comprend des éléments à retard pour réaliser la sélection d'une partie du signal reçu correspondant à une partie de la séquence de référence autre que celle de la séquence de corrélation d'origine.
